# EUROPÄISCHE PATENTSCHRIFT

(11) **EP 2 795 784 B1**
(45) Veröffentlichungstag und Bekanntmachung des Hinweises auf die Patenterteilung: **22.02.2017**
(21) Anmeldenummer: 12812540.8
(22) Anmeldetag: 03.12.2012
(51) Int. Cl.: H02M 7/49, H02J 7/00

(54) **ENERGIESPEICHEREINRICHTUNG, SYSTEM MIT ENERGIESPEICHEREINRICHTUNG UND VERFAHREN ZUM ANSTEUERN EINER ENERGIESPEICHEREINRICHTUNG**
ENERGY STORAGE DEVICE, SYSTEM HAVING AN ENERGY STORAGE DEVICE, AND METHOD FOR CONTROLLING AN ENERGY STORAGE DEVICE
DISPOSITIF DE STOCKAGE D'ÉNERGIE, SYSTÈME COMPRENANT UN DISPOSITIF DE STOCKAGE D'ÉNERGIE, ET PROCÉDÉ DE COMMANDE D'UN DISPOSITIF DE STOCKAGE D'ÉNERGIE

(30) Priorität: 22.12.2011 DE 102011089648
(43) Veröffentlichungstag der Anmeldung: 29.10.2014
(73) Patentinhaber: Robert Bosch GmbH, 70442 Stuttgart (DE)
(72) Erfinder: WEISSENBORN, Erik, 70374 Stuttgart (DE); KESSLER, Martin, 73527 Schwaebisch Gmuend (DE)
(86) Internationale Anmeldenummer: PCT/EP2012/074232
(87) Internationale Veröffentlichungsnummer: WO 2013/092183

(56) Entgegenhaltungen:
- DE-A1- 10 103 031
- DE-A1-102009 034 596
- US-A- 5 642 275
- US-A1- 2011 215 760

## Beschreibung

Die Erfindung betrifft eine Energiespeichereinrichtung, ein System mit einer Energiespeichereinrichtung und ein Verfahren zum Ansteuern einer Energiespeichereinrichtung, insbesondere in einer Batteriedirektumrichterschaltung zur Stromversorgung elektrischer Maschinen.

### Stand der Technik

Es zeichnet sich ab, dass in Zukunft sowohl bei stationären Anwendungen, wie z.B. Windkraftanlagen oder Solaranlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren.

Die Einspeisung von mehrphasigem Strom in eine elektrische Maschine wird üblicherweise durch einen Umrichter in Form eines Pulswechselrichters bewerkstelligt. Dazu kann eine von einem Gleichspannungszwischenkreis bereitgestellte Gleichspannung in eine mehrphasige Wechselspannung, beispielsweise eine dreiphasige Wechselspannung umgerichtet werden. Der Gleichspannungszwischenkreis wird dabei von einem Strang aus seriell verschalteten Batteriemodulen gespeist. Um die für eine jeweilige Anwendung gegebenen Anforderungen an Leistung und Energie erfüllen zu können, werden häufig mehrere Batteriemodule in einer Traktionsbatterie in Serie geschaltet.

Die Serienschaltung mehrerer Batteriemodule bringt das Problem mit sich, dass der gesamte Strang ausfällt, wenn ein einziges Batteriemodul ausfällt. Ein solcher Ausfall des Energieversorgungsstrangs kann zu einem Ausfall des Gesamtsystems führen. Weiterhin können temporär oder permanent auftretende Leistungsminderungen eines einzelnen Batteriemoduls zu Leistungsminderungen im gesamten Energieversorgungsstrang führen.

In der Druckschrift US 5,642,275 A1 ist ein Batteriesystem mit integrierter Wechselrichterfunktion beschrieben. Systeme dieser Art sind unter dem Namen Multilevel Cascaded Inverter oder auch Battery Direct Inverter (Batteriedirektumrichter, BDI) bekannt. Solche Systeme umfassen Gleichstromquellen in mehreren Energiespeichermodulsträngen, welche direkt an eine elektrische Maschine oder ein elektrisches Netz anschließbar sind. Dabei können einphasige oder mehrphasige Versorgungsspannungen generiert werden. Die Energiespeichermodulstränge weisen dabei eine Mehrzahl von in Serie geschalteten Energiespeichermodulen auf, wobei jedes Energiespeichermodul mindestens eine Batteriezelle und eine zugeordnete steuerbare Koppeleinheit aufweist, welche es erlaubt, in Abhängigkeit von Steuersignalen den jeweiligen Energiespeichermodulstrang zu unterbrechen oder die jeweils zugeordnete mindestens eine Batteriezelle zu überbrücken oder die jeweils zugeordnete mindestens eine Batteriezelle in den jeweiligen Energiespeichermodulstrang zu schalten. Durch geeignete Ansteuerung der Koppeleinheiten, z.B. mit Hilfe von Pulsweitenmodulation, können auch geeignete Phasensignale zur Steuerung der Phasenausgangsspannung bereitgestellt werden, so dass auf einen separaten Pulswechselrichter verzichtet werden kann. Der zur Steuerung der Phasenausgangsspannung erforderliche Pulswechselrichter ist damit sozusagen in den BDI integriert.

Die Druckschrift US5642275 A offenbart eine Umrichterschaltung zur Erzeugung einer n-phasigen Versorgungsspannung, welche eine Vielzahl von in Serie geschalteten Energiespeichermodulen mit Energiespeicher und Koppeleinrichtungen aufweist.

Die Druckschrift US2011/215760 A1 offenbart einen Ladungsausgleich zwischen einzelnen Energiespeichern.

Die Druckschrift DE10103031 A1 offenbart ein Verfahren zur Symmetrierung von einzelnen Spannungen von Energiespeichermodulen.

BDIs weisen üblicherweise einen höheren Wirkungsgrad und eine höhere Ausfallsicherheit gegenüber herkömmlichen Systemen auf. Die Ausfallsicherheit wird unter anderem dadurch gewährleistet, dass defekte, ausgefallene oder nicht voll leistungsfähige Batteriezellen durch geeignete Überbrückungsansteuerung der Koppeleinheiten aus den Energieversorgungssträngen herausgeschaltet werden können. Die Phasenausgangsspannung eines Energiespeichermodulstrangs kann durch entsprechendes Ansteuern der Koppeleinheiten variiert und insbesondere stufig eingestellt werden. Die Stufung der Ausgangsspannung ergibt sich dabei aus der Spannung eines einzelnen Energiespeichermoduls, wobei die maximal mögliche Phasenausgangsspannung die Summe der Spannungen aller Energiespeichermodule eines Energiespeichermodulstrangs bestimmt wird.

### Offenbarung der Erfindung

Die vorliegende Erfindung schafft gemäß einem Aspekt eine Energiespeichereinrichtung zum Erzeugen einer n-phasigen Versorgungsspannung, wobei n ≥ 1, mit n parallel geschalteten Energieversorgungszweigen, welche jeweils mit mindestens einem Ausgangsanschluss der Energiespeichereinrichtung gekoppelt sind, wobei jeder der Energieversorgungszweige eine Vielzahl von in Serie geschalteten Energiespeichermodulen aufweist. Die Energieversorgungszweige umfassen dabei jeweils ein Energiespeicherzellenmodul, welches mindestens eine Energiespeicherzelle aufweist, und eine Koppeleinrichtung mit ersten Koppelelementen, welche dazu ausgelegt sind, das Energiespeicherzellenmodul selektiv in den jeweiligen Energieversorgungszweig zu schalten oder zu überbrücken. Dabei weist mindestens einer der Energieversorgungszweige mindestens ein zweites Koppelelement auf, welches jeweils zwischen Ausgangsanschlüsse von in dem mindestens einen Energieversorgungszweig benachbarten Energiespeicherzellenmodulen gekoppelt ist, und welches dazu ausgelegt ist, die gekoppelten Energiespeicherzellenmodule parallel zueinander in den jeweiligen Energieversorgungszweig zu schalten.

Die vorliegende Erfindung schafft gemäß einem weiteren Aspekt ein System, mit n Phasenleitungen, welche mit jeweils einem von n Phasenanschlüssen einer n-phasigen elektrischen Maschine koppelbar sind, einer erfindungsgemäßen Energiespeichereinrichtung, deren Ausgangsanschlüsse mit je einer der n Phasenleitungen gekoppelt sind, und einer Steuereinrichtung, welche mit der Energiespeichereinrichtung gekoppelt ist, und welche dazu ausgelegt ist, das mindestens eine zweite Koppelelemente in Abhängigkeit von einem Ladungszustand der Energiespeicherzellen der Energiespeicherzellenmodule des mindestens einen Energieversorgungszweigs zum Ladungsausgleich zwischen benachbarten Energiespeichermodulen anzusteuern.

Gemäß einem weiteren Aspekt schafft die vorliegende Erfindung ein Verfahren zum Ansteuern einer erfindungsgemäßen Energiespeichereinrichtung, mit den Schritten des Ansteuerns der ersten Koppelelemente eines ersten Energiespeichermoduls des mindestens einen Energieversorgungszweigs zum Schalten des Energiespeicherzellenmoduls des ersten Energiespeichermoduls in den Energieversorgungszweig, des Ansteuerns der ersten Koppelelemente eines zweiten Energiespeichermoduls des mindestens einen Energieversorgungszweigs zum Schalten des Energiespeicherzellenmoduls eines zweiten, dem ersten Energiespeichermodul benachbarten Energiespeichermoduls in den Energieversorgungszweig, des Schließens eines zweiten Koppelelements, welches zwischen das erste Energiespeichermodul und das zweite Energiespeichermodul gekoppelt ist, und des Ansteuerns eines der ersten Koppelelemente des ersten Energiespeichermoduls in einem pulsbreitenmodulierten Taktbetrieb in Abhängigkeit von den Ladungszuständen der Energiespeicherzellenmodule des ersten Energiespeichermoduls und des zweiten Energiespeichermoduls.

### Vorteile der Erfindung

Es ist Idee der vorliegenden Erfindung, einen verbesserten Ladungsausgleich zwischen einzelnen Energiespeichermodulen einer Energiespeichereinrichtung zu ermöglichen, indem benachbarte Energiespeichermodule über ein zusätzliches Koppelelement zwischen Ausgangsanschlüssen ihrer jeweiligen Energiespeicherzellenmodule verbunden werden. Durch geeignete Ansteuerung des zusätzlichen Koppelelements wird die Möglichkeit geschaffen, sowohl während des Betriebs der Energiespeichereinrichtung als auch in einem Ruhezustand einen Ladungsausgleich zwischen Energiespeicherzellenmodulen zweier benachbarter Energiespeichermodule zu schaffen.

Ein erheblicher Vorteil dieser Anordnung besteht darin, dass ein aktives Balancing im Betrieb möglich ist, das heißt, dass die auftretenden Abweichungen der Ladezustände der Module jederzeit ausgeglichen werden können, und beispielsweise nicht erst in einem Aufladevorgang der Energiespeichereinrichtung.

Vorteilhafterweise können durch die Parallelschaltung von Energiespeichermodulen in den Energieversorgungszweigen auftretende Ströme symmetriert werden, so dass Impedanz- und Spannungsunterschiede paralleler Pfade kompensiert werden können. Dies bedeutet zugleich eine vorteilhafte gleichmäßige Belastung der einzelnen Energiespeichermodule.

Der schaltungstechnische Zusatzaufwand ist in vorteilhafter Weise gering. Darüber hinaus besteht der Vorteil, dass Verluste während des Balancings im Betrieb gering gehalten werden können, da kein zusätzlicher Stromaufbau für den Ladungsausgleich erforderlich ist.

Gemäß einer Ausführungsform kann die Energiespeichereinrichtung als Koppelelemente Halbleiterschalter, beispielsweise MOSFET-Schalter, aufweisen. Es kann gemäß einer weiteren Ausführungsform vorgesehen sein, dass die Koppelelemente in Vollbrückenschaltung ausgestaltet sind. In einer alternativen Ausführungsform können die Koppelelemente in Halbbrückenschaltung ausgestaltet sein.

Gemäß einer weiteren Ausführungsform kann eine Vielzahl von ersten einen Strom oder eine Stromänderung begrenzenden Elementen jeweils in Serie zu einem der Vielzahl der zweiten Koppelelemente gekoppelt sein. Dies kann beispielsweise ein Widerstand oder eine Induktivität sein, welche mögliche Stromstärkenschwankungen begrenzt und für einen gleichmäßigeren Betrieb sorgt. Gemäß einer weiteren Ausführungsform kann hierbei zwischen je zwei benachbarte Energiespeichermodule des mindestens einen Energieversorgungszweigs jeweils ein zweites einen Strom oder eine Stromänderung begrenzendes Element gekoppelt sein.

Gemäß einer Ausführungsform des erfindungsgemäßen Systems kann die Steuereinrichtung dazu ausgelegt sein, die Vielzahl der zweiten Koppelelemente in einem pulsbreitenmodulierten Taktbetrieb anzusteuern. Dadurch kann über eine geeignete Wahl von Frequenz und Pulsbreite der Anteil am Gesamtstrom, der durch das zweite Koppelelement fließt, flexibel eingestellt werden.

Gemäß einer Ausführungsform des erfindungsgemäßen Systems kann das System weiterhin eine n-phasige elektrische Maschine aufweisen, wobei n ≥ 1, welche n Phasenanschlüsse aufweist, die jeweils mit einer der n Phasenleitungen gekoppelt sind. Besonders für den Einsatz in elektrisch betriebenen Fahrzeugen wie Elektroautos oder Hybridfahrzeugen ist das System daher gut geeignet.

Gemäß einer Ausführungsform des erfindungsgemäßen Verfahrens kann das Ansteuern des einen der ersten Koppelelemente mithilfe eines Zweipunktreglers und in Abhängigkeit von einem Verhältnis der Ladungszustände der Energiespeicherzellenmodule des ersten Energiespeichermoduls und des zweiten Energiespeichermoduls erfolgen. Dieses Verfahren ermöglicht ein flexibles Verfahren für einen Ladungsausgleich in einem Batterierdirektumrichter, welches bereits während des Betriebs des Batterierdirektumrichters eingesetzt werden kann.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Systems mit einer Energiespeichereinrichtung gemäß einer Ausführungsform der vorliegenden Erfindung;
- Fig. 2: eine schematische Darstellung eines Energiespeichermoduls einer Energiespeichereinrichtung gemäß einer weiteren Ausführungsform der Erfindung;
- Fig. 3: eine schematische Darstellung eines Energiespeichermoduls einer Energiespeichereinrichtung gemäß einer weiteren Ausführungsform der Erfindung;
- Fig. 4: eine schematische Darstellung eines Energiespeichermoduls einer Energiespeichereinrichtung gemäß einer weiteren Ausführungsform der Erfindung;
- Fig. 5: eine schematische Darstellung eines Energiespeichermoduls einer Energiespeichereinrichtung gemäß einer weiteren Ausführungsform der Erfindung;
- Fig. 6: eine schematische Darstellung eines Ansteuerzustands zweier Energiespeichermodule einer Energiespeichereinrichtung gemäß einer weiteren Ausführungsform der Erfindung; und
- Fig. 7: eine schematische Darstellung eines Verfahrens zum Ansteuern einer Energiespeichereinrichtung gemäß einer weiteren Ausführungsform der vorliegenden Erfindung.

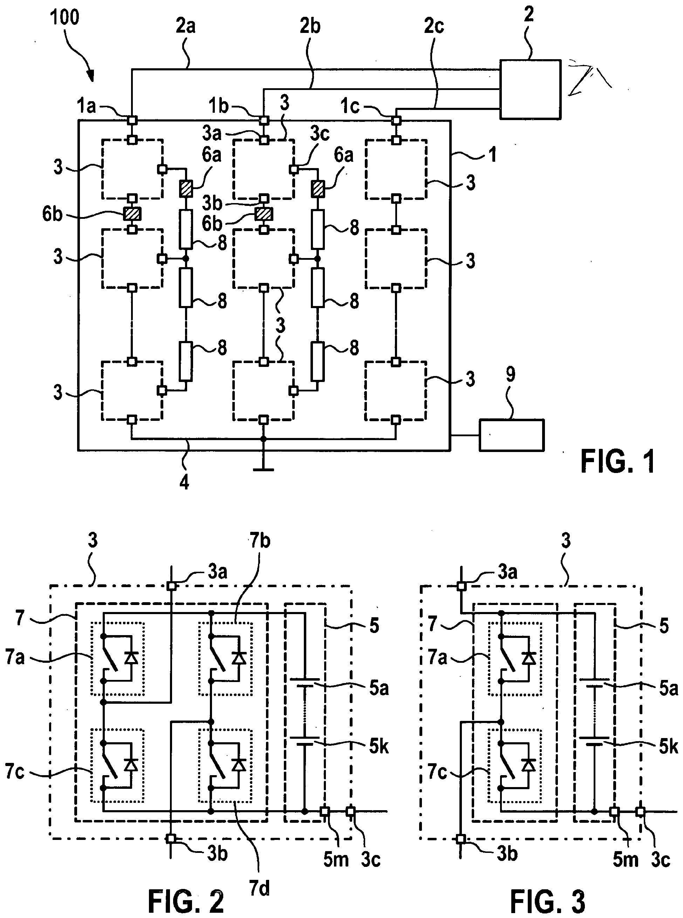

Fig. 1 zeigt ein System 100 zur Spannungswandlung von durch Energiespeichermodule 3 bereitgestellter Gleichspannung in eine n-phasige Wechselspannung. Das System 100 umfasst eine Energiespeichereinrichtung 1 mit Energiespeichermodulen 3, welche in Energieversorgungszweigen in Serie geschaltet sind. Beispielhaft sind in Fig. 1 drei Energieversorgungszweige gezeigt, welche zur Erzeugung einer dreiphasigen Wechselspannung, beispielsweise für eine Drehstrommaschine 2, geeignet sind. Es ist jedoch klar, dass jede andere Anzahl an Energieversorgungszweigen ebenso möglich sein kann. Die Energiespeichereinrichtung 1 verfügt an jedem Energieversorgungszweig über einen Ausgangsanschluss 1 a, 1 b, 1 c, welche jeweils an Phasenleitungen 2a, 2b bzw. 2c angeschlossen sind. Beispielhaft dient das System 100 in Fig. 1 zur Speisung einer dreiphasigen elektrischen Maschine 2. Es kann jedoch auch vorgesehen sein, dass die Energiespeichereinrichtung 1 zur Erzeugung von elektrischem Strom für ein Energieversorgungsnetz 2 verwendet wird. Bei einem einphasigen System kann es vorgesehen sein, dass lediglich ein Energieversorgungszweig ausgebildet ist. Dieser Energieversorgungszweig kann dann als Zweipol an die Versorgungseingänge einer elektrischen Last angeschlossen sein.

Das System 100 kann weiterhin eine Steuereinrichtung 9 umfassen, welche mit der Energiespeichereinrichtung 1 verbunden ist, und mithilfe derer die Energiespeichereinrichtung 1 gesteuert werden kann, um die gewünschten Ausgangsspannungen an den jeweiligen Ausgangsanschlüssen 1 a, 1 b, 1 c bereitzustellen.

Die Energieversorgungszweige können an ihrem Ende mit einem Bezugspotential 4 (Bezugsschiene) verbunden werden, welches in der dargestellten Ausführungsform in Bezug auf die Phasenleitungen 2a, 2b, 2c der elektrischen Maschine 2 ein mittleres Potential führt. Das Bezugspotential 4 kann beispielsweise ein Massepotential sein. Jeder der Energieversorgungszweige weist mindestens zwei in Reihe geschaltete Energiespeichermodule 3 auf. Beispielhaft beträgt die Anzahl der Energiespeichermodule 3 pro Energieversorgungszweig in Fig. 1 drei, wobei jedoch jede andere Anzahl von Energiespeichermodulen 3 ebenso möglich ist. Vorzugsweise umfasst dabei jeder der Energieversorgungszweige die gleiche Anzahl an Energiespeichermodulen 3, wobei es jedoch auch möglich ist, für jeden Energieversorgungszweig eine unterschiedliche Anzahl an Energiespeichermodulen 3 vorzusehen.

Die Energiespeichermodule 3 weisen jeweils zwei Ausgangsanschlüsse 3a und 3b auf, über welche eine Ausgangsspannung der Energiespeichermodule 3 bereitgestellt werden kann. Da die Energiespeichermodule 3 primär in Reihe geschaltet sind, summieren sich die Ausgangsspannungen der Energiespeichermodule 3 zu einer Gesamt-Ausgangsspannung, welche an dem jeweiligen der Ausgangsanschlüsse 1a, 1b, 1c der Energiespeichereinrichtung 1 bereitgestellt werden kann.

Beispielhafte Aufbauformen der Energiespeichermodule 3 sind in den Fig. 2 bis 5 in größerem Detail gezeigt. Die Energiespeichermodule 3 umfassen dabei jeweils eine Koppeleinrichtung 7 mit mehreren Koppelelementen 7a, 7c sowie gegebenenfalls 7b und 7d. Die Energiespeichermodule 3 umfassen weiterhin jeweils ein Energiespeicherzellenmodul 5 mit einem oder mehreren in Reihe geschalteten Energiespeicherzellen 5a bis 5k.

Das Energiespeicherzellenmodul 5 kann dabei beispielsweise in Reihe geschaltete Batterien 5a bis 5k, beispielsweise Lithium-Ionen-Batterien aufweisen. Dabei beträgt die Anzahl der Energiespeicherzellen 5a bis 5k in den in Fig. 2 bis 5 gezeigten Energiespeichermodulen 3 beispielhaft zwei, wobei jedoch jede andere Zahl von Energiespeicherzellen 5a bis 5k ebenso möglich ist. In anderen Ausführungsformen können die Energiespeicherzellen 5a bis 5k beispielsweise auch Photovoltaikmodule umfassen.

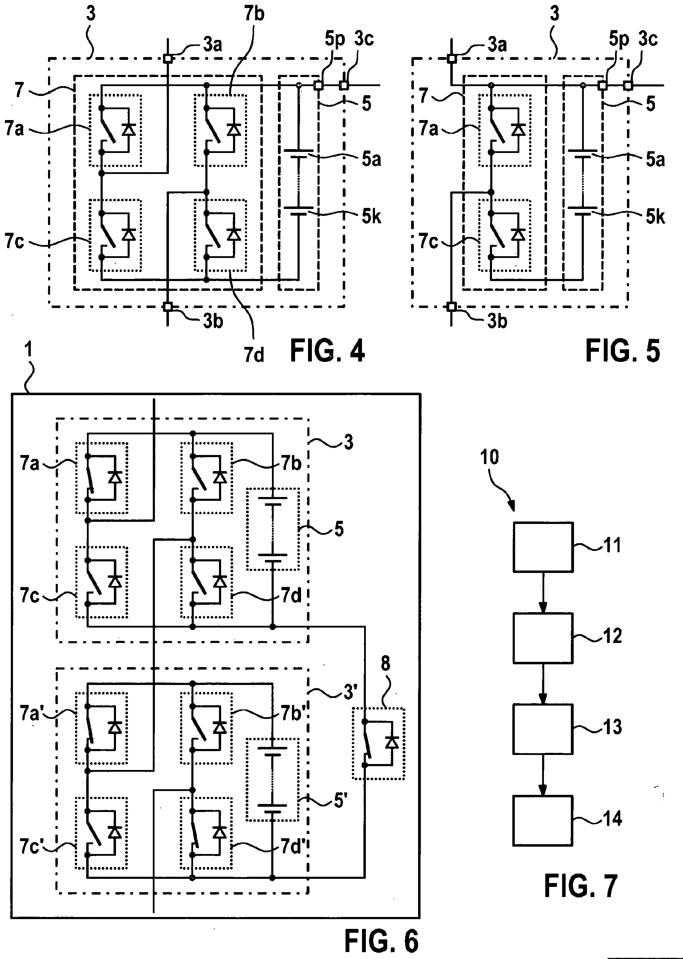

Die Energiespeicherzellenmodule 5 sind über Verbindungsleitungen mit Eingangsanschlüssen der zugehörigen Koppeleinrichtung 7 verbunden. Die Koppeleinrichtung 7 ist in den Fig. 2 und 4 beispielhaft als Vollbrückenschaltung mit je zwei Koppelelementen 7a, 7c und zwei Koppelelementen 7b, 7d ausgebildet. Die Koppelelemente 7a, 7b, 7c, 7d können dabei jeweils ein aktives Schaltelement, beispielsweise einen Halbleiterschalter, und eine dazu parallel geschaltete Freilaufdiode aufweisen. Es kann dabei vorgesehen sein, dass die Koppelelemente 7a, 7b, 7c, 7d als MOSFET-Schalter ausgebildet sind, welche bereits eine intrinsische Diode aufweisen. Alternativ ist es möglich, jeweils nur zwei Koppelelemente 7a, 7c auszubilden, so dass - wie in Fig. 3 und 5 beispielhaft dargestellt - eine Halbbrückenschaltung realisiert wird.

Die Koppelelemente 7a, 7b, 7c, 7d können derart angesteuert werden, beispielsweise mithilfe der in Fig. 1 dargestellten Steuereinrichtung 9, dass das jeweilige Energiespeicherzellenmodul 5 selektiv zwischen die Ausgangsanschlüsse 3a und 3b geschaltet wird oder dass das Energiespeicherzellenmodul 5 überbrückt wird. Mit Bezug auf Fig. 2 kann das Energiespeicherzellenmodul 5 beispielsweise in Vorwärtsrichtung zwischen die Ausgangsanschlüsse 3a und 3b geschaltet werden, indem das aktive Schaltelement des Koppelelements 7d und das aktive Schaltelement des Koppelelements 7a in einen geschlossenen Zustand versetzt werden, während die beiden übrigen aktiven Schaltelemente der Koppelelemente 7b und 7c in einen offenen Zustand versetzt werden. Ein Überbrückungszustand kann beispielsweise dadurch eingestellt werden, dass die beiden aktiven Schaltelemente der Koppelelemente 7a und 7b in geschlossenen Zustand versetzt werden, während die beiden aktiven Schaltelemente der Koppelelemente 7c und 7d in offenem Zustand gehalten werden. Analoge Erwägungen können jeweils für die Brückenschaltungen in den Fig. 3 bis 5 angestellt werden.

Durch geeignetes Ansteuern der Koppeleinrichtungen 7 können daher einzelne Energiespeicherzellenmodule 5 der Energiespeichermodule 3 gezielt in die Reihenschaltung eines Energieversorgungszweigs integriert werden.

Die Energiespeichereinrichtung 1 des Systems 100 weist weiterhin zweite Koppelelemente 8 auf, welche jeweils zwischen zwei benachbarte Energiespeichermodule 3 eines Energieversorgungszweigs gekoppelt sind. Dabei koppeln die zweiten Koppelelemente 8 die Energiespeichermodule 3 jeweils zwischen Ausgangsanschlüssen 3c der Energiespeichermodule 3. Es ist dabei möglich, dass alle Energiespeichermodule 3 eines Energieversorgungszweigs untereinander über zweite Koppelelemente 8 gekoppelt sind. Alternativ kann auch nur ein Teil der Energiespeichermodule 3 eines Energieversorgungszweigs untereinander gekoppelt sein. In Fig. 1 sind beispielhaft zwei der drei Energieversorgungszweige mit zweiten Koppelelementen 8 dargestellt. Dabei kann es in anderen Ausführungsformen jedoch auch möglich sein, dass mehr oder weniger Energieversorgungszweige mit zweiten Koppelelementen 8 ausgestaltet sind.

Die zweiten Koppelelemente 8 sind dazu ausgelegt, die Energiespeicherzellenmodule 5 zweier benachbarter Energiespeichermodule 3 parallel in den jeweiligen Energieversorgungszweig zu schalten. Dazu können die zweiten Koppelelemente 8 jeweils aktive Schaltelemente, wie beispielsweise Halbleiterschalter und eine parallel dazu geschaltete Freilaufdiode umfassen. In einer Ausführungsform können die zweiten Koppelelemente 8 jeweils MOSFET-Schalter aufweisen, welche über eine intrinsische Diode verfügen.

In Serie zu den zweiten Koppelelementen 8 können Strom oder eine Stromänderung begrenzende Elemente 6a geschaltet sein. Beispielhaft und aus Gründen der Übersichtlichkeit sind in Fig. 1 lediglich zwei Strom oder eine Stromänderung begrenzende Elemente 6a gezeigt, wobei jedes andere der zweiten Koppelelemente 8 ebenfalls in Reihe mit derartigen Elementen 6a geschaltet sein kann. Weiterhin können zwischen den einzelnen Energiespeichermodulen 3 jeweils weitere Strom oder eine Stromänderung begrenzende Elemente 6b angeordnet sein. Die Elemente 6a, 6b können beispielsweise Widerstände bzw. Induktivitäten aufweisen. Es kann auch möglich sein, dass die durch die physikalische Verdrahtung der jeweiligen einzelnen Energiespeichermodule 3 bzw. der zweiten Koppelelemente 8 mit den einzelnen Energiespeichermodulen 3 die Verbindungsleitungen über eine/n interne/n bzw. parasitäre/n Widerstände bzw. Induktivität verfügen, die ausreicht, um die Stromänderung durch die Energieversorgungszweige und die Pfade mit den zweiten Koppelelementen 8 hinreichend zu begrenzen. In diesem Fall ist es nicht notwendig, separate einen Strom oder eine Stromänderung begrenzende Elemente 6a, 6b vorzusehen.

Die Elemente 6a, 6b können dazu dienen, Stromstärkenschwankungen, sogenanntes "Strom-Ripple" auf den jeweiligen Leitungen zu begrenzen, die aufgrund der hochfrequenten Ansteuerung der Koppelelemente 7a, 7b, 7c, 7d entstehen können.

Wie in Fig. 2 bis 5 gezeigt, kann der Ausgangsanschluss 3c der Energiespeichermodule 3 jeweils mit einem Ausgangsanschluss des Energiespeicherzellenmoduls 5 des Energiespeichermoduls 3 verbunden sein. Beispielsweise kann der Ausgangsanschluss 3c jeweils mit dem Minuspol der Batteriezellen 5a bis 5k des Energiespeicherzellenmoduls 5 über einen Ausgangsanschluss 5m gekoppelt sein, wie beispielhaft in Fig. 2 und 3 dargestellt. Alternativ kann es möglich sein, den Ausgangsanschluss 3c jeweils mit dem Pluspol der Batteriezellen 5a bis 5k des Energiespeicherzellenmoduls 5 über einen Ausgangsanschluss 5p zu koppeln, wie beispielhaft in Fig. 4 und 5 dargestellt.

Fig. 6 zeigt eine schematische Darstellung eines beispielhaften Ansteuerzustands zweier Energiespeichermodule 3, 3' einer Energiespeichereinrichtung, beispielsweise der Energiespeichermodule 3 einer Energiespeichereinrichtung 1 in Fig. 1. Die Energiespeichermodule 3, 3' können dabei entsprechend der in Fig. 2 gezeigten Konfiguration aufgebaut sein, wobei entsprechende Konfigurationen gemäß einer der in Fig. 3 bis 5 gezeigten Ausführungsformen gleichermaßen und in analoger Weise möglich sind.

Der in Fig. 6 als Momentaufnahme gezeigte Ansteuerzustand dient in Verbindung mit dem in Fig. 7 schematisch dargestellten Verfahren 10 zur Erläuterung eines Verfahrens zum Ansteuern einer Energiespeichereinrichtung, insbesondere der Energiespeichereinrichtung 1 in Fig. 1. In einem ersten Schritt 11 des Verfahrens 10 erfolgt ein Ansteuern der ersten Koppelelemente 7a, 7b, 7c, 7d eines ersten Energiespeichermoduls 3 des mindestens einen Energieversorgungszweigs zum Schalten des Energiespeicherzellenmoduls 5 des ersten Energiespeichermoduls 3 in den Energieversorgungszweig. Wie in Fig. 6 beispielhaft gezeigt, kann das Koppelelement 7a geschlossen werden. Wenn in einem Schritt 12 des Verfahrens die ersten Koppelelemente 7a', 7b', 7c', 7d' des zweiten Energiespeichermoduls 3' des mindestens einen Energieversorgungszweigs zum Schalten des Energiespeicherzellenmoduls 5' des zweiten, dem ersten Energiespeichermodul 3 benachbarten Energiespeichermoduls 3' in den Energieversorgungszweig angesteuert werden, und in einem Schritt 13 ein zweites Koppelelement 8, welches zwischen das erste Energiespeichermodul 3 und das zweite Energiespeichermodul 3' gekoppelt ist, geschlossen wird, ist das Energiespeicherzellenmodul 5 des ersten Energiespeichermoduls 3 über den Pfad mit dem zweiten Koppelelement 8 sowie das geschlossene Koppelelement 7d' in den Energieversorgungszweig geschaltet.

In einem Schritt 14 des Verfahrens 10 kann dann ein Ansteuern eines der ersten Koppelelemente - wie in Fig. 6 beispielhaft dargestellt, das erste Koppelelement 7b - des ersten Energiespeichermoduls 3 in einem pulsbreitenmodulierten Taktbetrieb in Abhängigkeit von den Ladungszuständen der Energiespeicherzellenmodule 5, 5' des ersten Energiespeichermoduls 3 und des zweiten Energiespeichermoduls 3' erfolgt, kann in periodischen Abständen, das zweite Energiespeicherzellenmodul 5' über das Koppelelement 7b und das Koppelelement 7d' parallel zu dem ersten Energiespeicherzellenmodul 5 in den Energieversorgungszweig geschaltet werden. Das Koppelelement 7b kann dazu beispielsweise von der Steuereinrichtung 9 in Fig. 1 in einem pulsbreitenmodulierten Taktbetrieb angesteuert werden, so dass der Anteil am Gesamtstrom, der durch das Energiespeichermodul 3' getragen wird, flexibel eingestellt werden kann. Beispielsweise kann die Pulsbreite und/oder die Taktfrequenz derart eingestellt werden, dass der Anteil zwischen 0% und 50% des Gesamtstroms beträgt.

Der Taktbetrieb kann beispielsweise über einen Zweipunktregler realisiert werden. Vorzugsweise kann der pulsbreitenmodulierte Taktbetrieb derart eingestellt werden, dass das Verhältnis der Ströme durch die Energiespeicherzellenmodule 5 und 5' einen vorbestimmten Wert aufweist, welcher zum Beispiel von den Ladungszuständen der Energiespeicherzellen in den Energiespeicherzellenmodulen 5 und 5' abhängig sein kann.

In gleicher Weise kann für andere Schaltungszustände der Koppelelemente 7a, 7b, 7c, 7d bzw. 7a', 7b', 7c', 7d' der Energiespeichermodule 3 und 3' jeweils eines der Koppelelemente in einem pulsbreitenmodulierten Taktbetrieb angesteuert werden, um einen Ladungsausgleich zwischen den Energiespeicherzellenmodulen 5 und 5' durchzuführen.

Das Verfahren 10 eignet sich insbesondere dazu, im Betrieb der Energiespeichereinrichtung 1 durchgeführt zu werden, das heißt, wenn die Energiespeichereinrichtung 1 betrieben wird, um eine n-phasige Ausgangsspannung zu erzeugen. Alternativ kann es möglich sein, über entsprechende Ansteuerung eines der Koppelelemente 7a, 7b, 7c, 7d bzw. 7a', 7b', 7c', 7d' und gleichzeitiges Schließen des zweiten Koppelelements 8 einen Ladungsausgleich zwischen den Energiespeicherzellenmodulen 5 und 5' durchzuführen, ohne dass ein Strom in dem Energieversorgungszweig fließt. Dies kann beispielsweise in einem Ruhezustand der Energiespeichereinrichtung 1 erfolgen.

## Patentansprüche

1. Energiespeichereinrichtung (1) zum Erzeugen einer n-phasigen Versorgungsspannung, wobei n ≥ 1, mit:
n parallel geschalteten Energieversorgungszweigen, welche jeweils mit mindestens einem Ausgangsanschluss (1 a, 1 b, 1 c) der Energiespeichereinrichtung (1) gekoppelt sind, wobei jeder der Energieversorgungszweige eine Vielzahl von in Serie geschalteten Energiespeichermodulen (3) aufweist, welche jeweils umfassen:
ein Energiespeicherzellenmodul (5), welches mindestens eine Energiespeicherzelle (5a, 5k) aufweist, und
eine Koppeleinrichtung (7) mit ersten Koppelelementen (7a, 7b, 7c, 7d), welche dazu ausgelegt sind, das Energiespeicherzellenmodul (5) selektiv in den jeweiligen Energieversorgungszweig zu schalten oder zu überbrücken; und
wobei mindestens einer der Energieversorgungszweige mindestens ein zweites Koppelelement (8) aufweist, welches jeweils zwischen Ausgangsanschlüsse (5m, 5p) von in dem mindestens einen Energieversorgungszweig benachbarten Energiespeicherzellenmodulen (5) gekoppelt ist, und welches dazu ausgelegt ist, die gekoppelten Energiespeicherzellenmodule (5) parallel zueinander in den jeweiligen Energieversorgungszweig zu schalten.

2. Energiespeichereinrichtung (1) nach Anspruch 1, wobei die Koppeleinrichtungen (9) Koppelelemente (7, 8) in Vollbrückenschaltung umfassen.

3. Energiespeichereinrichtung (1) nach Anspruch 1, wobei die Koppeleinrichtungen (9) Koppelelemente (7,8) in Halbbrückenschaltung umfassen.

4. Energiespeichereinrichtung (1) nach einem der Ansprüche 1 bis 3, wobei mindestens ein erstes Strom oder eine Stromänderung begrenzendes Element (6a) in Serie zu dem mindestens einen zweiten Koppelelement (8) gekoppelt ist.

5. Energiespeichereinrichtung (1) nach Anspruch 4, wobei zwischen je zwei benachbarte Energiespeichermodulen (3) des mindestens einen Energieversorgungszweigs jeweils ein zweites Strom oder eine Stromänderung begrenzendes Element (6b) gekoppelt ist.

6. Energiespeichereinrichtung (1) nach Anspruch 5, wobei das erste Strom oder eine Stromänderung begrenzende Element (6a) und das zweite Strom oder eine Stromänderung begrenzende Element (6b) Induktivitäten oder ohmsche Widerstände sind.

7. System (100), mit:
n Phasenleitungen (2a, 2b, 2c), welche mit jeweils einem von n Phasenanschlüssen einer n-phasigen elektrischen Maschine (2) koppelbar sind;
einer Energiespeichereinrichtung (1) nach einem der Ansprüche 1 bis 5, deren Ausgangsanschlüsse (1 a, 1 b, 1 c) mit je einer der n Phasenleitungen (2a, 2b, 2c) gekoppelt sind; und
einer Steuereinrichtung (9), welche mit der Energiespeichereinrichtung (1) gekoppelt ist, und welche dazu ausgelegt ist, das mindestens eine zweite Koppelelement (8) in Abhängigkeit von einem Ladungszustand der Energiespeicherzellen (5a, 5k) der Energiespeicherzellenmodule (5) des mindestens einen Energieversorgungszweigs zum Ladungsausgleich zwischen benachbarten Energiespeichermodulen (3) anzusteuern.

8. System nach Anspruch 7, wobei die Steuereinrichtung (9) dazu ausgelegt ist, das zweite Koppelelement (8) in einem pulsbreitenmodulierten Taktbetrieb anzusteuern.

9. System nach einem der Ansprüche 7 und 8, weiterhin mit:
einer n-phasigen elektrischen Maschine (2), wobei n ≥ 1, welche n Phasenanschlüsse aufweist, die jeweils mit einer der n Phasenleitungen (2a, 2b, 2c) gekoppelt sind.

10. Verfahren (10) zum Ansteuern einer Energiespeichereinrichtung (1) nach einem der Ansprüche 1 bis 6, mit den Schritten:
Ansteuern (11) der ersten Koppelelemente (7a, 7b, 7c, 7d) eines ersten Energiespeichermoduls (3) des mindestens einen Energieversorgungszweigs zum Schalten des Energiespeicherzellenmoduls (5) des ersten Energiespeichermoduls (3) in den Energieversorgungszweig;
Ansteuern (12) der ersten Koppelelemente (7a', 7b', 7c', 7d') eines zweiten Energiespeichermoduls (3') des mindestens einen Energieversorgungszweigs zum Schalten des Energiespeicherzellenmoduls (5') eines zweiten, dem ersten Energiespeichermodul (3) benachbarten Energiespeichermoduls (3') in den Energieversorgungszweig;
Schließen (13) eines zweiten Koppelelements (8), welches zwischen das erste Energiespeichermodul (3) und das zweite Energiespeichermodul (3') gekoppelt ist; und
Ansteuern (14) eines der ersten Koppelelemente (7b) des ersten Energiespeichermoduls (3) in einem pulsbreitenmodulierten Taktbetrieb in Abhängigkeit von den Ladungszuständen der Energiespeicherzellenmodule (5, 5') des ersten Energiespeichermoduls (3) und des zweiten Energiespeichermoduls (3').

11. Verfahren (10) nach Anspruch 10, wobei das Ansteuern des einen der ersten Koppelelemente (7b) mithilfe eines Zweipunktreglers und in Abhängigkeit von einem Verhältnis der Ladungszustände der Energiespeicherzellenmodule (5, 5') des ersten Energiespeichermoduls (3) und des zweiten Energiespeichermoduls (3') erfolgt.

## Claims

1. Energy storage device (1) for generating an n-phase supply voltage, wherein n ≥ 1, comprising:
n energy supply branches which are connected in parallel and which are each coupled to at least one output connection (1a, 1b, 1c) of the energy storage device (1), wherein each of the energy supply branches has a multiplicity of energy storage modules (3) which are connected in series and which each comprise:
an energy storage cell module (5), which has at least one energy storage cell (5a, 5k), and
a coupling device (7) comprising first coupling elements (7a, 7b, 7c, 7d), which are designed to switch the energy storage cell module (5) selectively into the respective energy supply branch or to bypass said energy storage cell module; and
wherein at least one of the energy supply branches has at least one second coupling element (8), which is coupled in each case between output connections (5m, 5p) of adjacent energy storage cell modules (5) in the at least one energy supply branch, and which is designed to switch the coupled energy storage cell modules (5) in parallel with one another into the respective energy supply branch.

2. Energy storage device (1) according to Claim 1, wherein the coupling devices (9) comprise coupling elements (7, 8) with a full-bridge circuit.

3. Energy storage device (1) according to Claim 1, wherein the coupling devices (9) comprise coupling elements (7, 8) with a half-bridge circuit.

4. Energy storage device (1) according to one of Claims 1 to 3, wherein at least a first element (6a) which limits current or a change in current is coupled in series with the at least one second coupling element (8).

5. Energy storage device (1) according to Claim 4, wherein in each case a second element (6b) which limits current or a change in current is coupled between in each case two adjacent energy storage modules (3) of the at least one energy supply branch.

6. Energy storage device (1) according to Claim 5, wherein the first element (6a) which limits current or a change in current and the second element (6b) which limits current or a change in current are inductances or ohmic resistances.

7. System (100), comprising:
n phase lines (2a, 2b, 2c), which can be coupled to in each case one of n phase connections of an n-phase electric machine (2);
an energy storage device (1) according to one of Claims 1 to 5, whose output connections (1a, 1b, 1c) are coupled to in each case one of the n phase lines (2a, 2b, 2c); and
a control device (9), which is coupled to the energy storage device (1) and which is designed to actuate the at least one second coupling element (8) depending on a state of charge of the energy storage cells (5a, 5k) of the energy storage cell modules (5) of the at least one energy supply branch for charge balancing between adjacent energy storage modules (3).

8. System according to Claim 7, wherein the control device (9) is designed to actuate the second coupling element (8) in a pulse-width-modulated clocked operating mode.

9. System according to either of Claims 7 and 8, further comprising:
an n-phase electric machine (2), wherein n ≥ 1, which has n phase connections, which are each coupled to one of the n phase lines (2a, 2b, 2c).

10. Method (10) for actuating an energy storage device (1) according to one of Claims 1 to 6, comprising the following steps:
actuating (11) the first coupling elements (7a, 7b, 7c, 7d) of a first energy storage module (3) of the at least one energy supply branch so as to switch the energy storage cell module (5) of the first energy storage module (3) into the energy supply branch;
actuating (12) the first coupling elements (7a', 7b', 7c', 7d') of a second energy storage module (3') of the at least one energy supply branch so as to switch the energy storage cell module (5') of a second energy storage module (3'), which is adjacent to the first energy storage module (3), into the energy supply branch;
closing (13) a second coupling element (8), which is coupled between the first energy storage module (3) and the second energy storage module (3'); and
actuating (14) one of the first coupling elements (7b) of the first energy storage module (3) in a pulse-width-modulated clocked operating mode depending on the states of charge of the energy storage cell modules (5, 5') of the first energy storage module (3) and the second energy storage module (3').

11. Method (10) according to Claim 10, wherein the actuation of one of the first coupling elements (7b) is performed with the aid of a bang-bang controller and depending on a ratio of the states of charge of the energy storage cell modules (5, 5') of the first energy storage module (3) and of the second energy storage module (3').

## Revendications

1. Dispositif de stockage d'énergie (1) pour la production d'une tension d'alimentation à n phases, avec n ≥ 1, comportant :
n branches d'alimentation en énergie montées en parallèle, qui sont chacune couplées à une borne de sortie (1a, 1b, 1c) du dispositif de stockage d'énergie (1), dans lequel chacune des branches de stockage d'énergie comprend une pluralité de modules de stockage d'énergie (3) montés en série, lesquelles branches d'alimentation en énergie comprennent chacune :
un module d'éléments de stockage d'énergie (5) qui comporte au moins un élément de stockage d'énergie (5a, 5k), et
un dispositif de couplage (7) comprenant des premiers éléments de couplage (7a, 7b, 7c, 7d) qui sont conçus pour sélectivement connecter le module d'éléments de stockage d'énergie (5) à la branche d'alimentation en énergie respective ou pour le court-circuiter ; et
dans lequel au moins l'une des branches d'alimentation en énergie comprend au moins un second élément de couplage (8) qui est respectivement couplé entre des bornes de sortie (5m, 5p) de modules de stockage d'énergie (5) adjacents dans ladite au moins une branche d'alimentation en énergie, et qui est conçu pour connecter en parallèle les uns aux autres les modules de stockage d'énergie (5) ainsi couplés dans la branche d'alimentation en énergie correspondante.

2. Dispositif de stockage d'énergie (1) selon la revendication 1, dans lequel les dispositifs de couplage (9) comprennent des éléments de couplage (7, 8) montés en pont intégral.

3. Dispositif de stockage d'énergie (1) selon la revendication 1, dans lequel les dispositifs de couplage (9) comprennent des éléments de couplage (7, 8) montés en demi-pont.

4. Dispositif de stockage d'énergie (1) selon l'une quelconque des revendications 1 à 3, dans lequel au moins un premier élément (6a) de limitation du courant ou d'une variation du courant est couplé en série audit au moins un second élément de couplage (8).

5. Dispositif de stockage d'énergie (1) selon la revendication 4, dans lequel un second élément (6b) de limitation du courant ou d'une variation du courant est respectivement couplé entre deux modules d'alimentation en énergie (3) adjacents de ladite au moins une branche d'alimentation en énergie.

6. Dispositif de stockage d'énergie (1) selon la revendication 5, dans lequel le premier premier élément (6a) de limitation du courant ou d'une variation du courant et le second élément (6b) de limitation du courant ou d'une variation du courant sont des inductances ou des résistances ohmiques.

7. Système (100), comportant :
n lignes de phase (2a, 2b, 2c) qui peuvent être respectivement couplées à l'une de n bornes de phase d'une machine électrique à n phases (2) ;
un dispositif de stockage d'énergie (1) selon l'une quelconque des revendications 1 à 5, dont des bornes de sortie (1a, 1b, 1c) sont respectivement couplées à l'une des n lignes de phase (2a, 2b, 2c) ; et
un dispositif de commande (9) qui est couplé au dispositif de stockage d'énergie (1) et qui est conçu pour commander ledit au moins un second élément de couplage (8) en fonction d'un état de charge des éléments de stockage d'énergie (5a, 5k) du module d'éléments de stockage d'énergie (5) de ladite au moins une branche d'alimentation en énergie afin d'équilibrer la charge entre des modules de stockage d'énergie (3) adjacents.

8. Système selon la revendication 7, dans lequel le dispositif de commande (9) est conçu pour commander le second élément de couplage (8) de manière cadencée par modulation d'impulsion en largeur.

9. Système selon l'une quelconque des revendications 7 et 8, comportant en outre :
une machine électrique à n phases (2), avec n ≥ 1, comprenant n bornes de phases qui sont respectivement couplées à l'une des n lignes de phase (2a, 2b, 2c).

10. Procédé (10) pour commander un dispositif de stockage d'énergie (1) selon l'une quelconque des revendications 1 à 6, comportant les étapes consistant à :
commander (11) le premier élément de couplage (7a, 7b, 7c, 7d) d'un premier module de stockage d'énergie (3) de ladite au moins une branche d'alimentation en énergie afin de connecter le module d'éléments de stockage d'énergie (5) du premier module de stockage d'énergie (3) dans la branche d'alimentation en énergie ;
commander (12) le premier élément de couplage (7a', 7b', 7c', 7d') d'un second module de stockage d'énergie (3') de ladite au moins une branche d'alimentation en énergie afin de connecter le module d'éléments de stockage d'énergie (5') d'un second module de stockage d'énergie (3'), adjacent au premier module de stockage d'énergie (3), dans la branche d'alimentation en énergie ;
fermer (13) un second élément de couplage (8) qui est couplé entre le premier module de stockage d'énergie (3) et le second module de stockage d'énergie (3') ; et commander (14) l'un des premiers éléments de couplage (7b) du premier module de stockage d'énergie (3) de manière cadencée par modulation d'impulsion en largeur en fonction des états de charge des modules d'éléments de stockage d'énergie (5, 5') du premier module de stockage d'énergie (3) et du second module de stockage d'énergie (3').

11. Procédé (10) selon la revendication 10, dans lequel la commande dudit un des premiers éléments de couplage (7b) est effectuée à l'aide d'un régulateur à deux points et en fonction d'un rapport des états de charge des modules d'éléments de stockage d'énergie (5, 5') du premier module de stockage d'énergie (3) et du second module de stockage d'énergie (3').
